# EUROPEAN PATENT SPECIFICATION

(11) **EP 1 960 092 B1**
(45) Date of publication and mention of the grant of the patent: **10.11.2010**
(21) Application number: 05849571.4
(22) Date of filing: 07.12.2005
(51) Int. Cl.: B01F 7/04, B01F 15/06, B29B 7/44

(54) **DEVICE AND PROCESS FOR CONTINUOUS HORIZONTAL MIXING**
VORRICHTUNG UND VERFAHREN ZUM KONTINUIERLICHEN HORIZONTALEN MISCHEN
DISPOSITIF ET PROCEDE POUR LE MELANGE HORIZONTAL EN CONTINU

(43) Date of publication of application: 27.08.2008
(73) Proprietor: Lico S.P.A., 21051 Arcisate (IT)
(72) Inventor: LICO, Franco, I-21050 Cuasso al Monte (IT)
(74) Representative: Jaumann, Paolo
(86) International application number: PCT/IT2005/000720
(87) International publication number: WO 2007/066362

(56) References cited:
- EP-A- 0 947 540
- CH-A- 487 720
- DE-A1- 2 615 506
- DE-A1- 3 032 039
- US-A- 1 665 789
- US-A- 2 907 555
- US-A- 4 015 829
- US-A- 5 393 138
- US-B1- 6 709 147
- PATENT ABSTRACTS OF JAPAN vol. 013, no. 327 (M-854), 24 July 1989 (1989-07-24) -& JP 01 110104 A (HITACHI ZOSEN CORP), 26 April 1989 (1989-04-26)

## Description

### TECHNICAL FIELD

This invention relates to a device and a process for continuous horizontal mixing.

### BACKGROUND ART

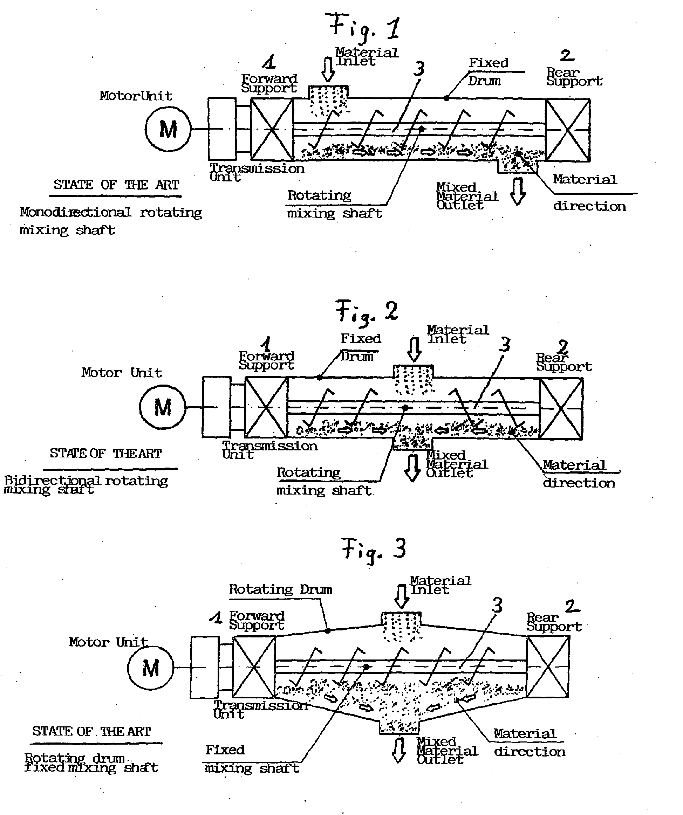

In all industrial, pharmaceutical, food, chemical, plastic and other processes requiring the mixing and homogenization of solid or solid and liquid components, or liquids with liquids having different viscosities, or doughy products at room temperature, or pre-warmed or cooled to a desired temperature, the existing technology uses either a monodirectional rotating mixing shaft (see fig. 1) or a bidirectional rotating mixing shaft (see fig. 2) or a rotating drum with fixed mixing shaft (see fig. 3).

In all three cases the mixing shaft is held by a forward support 1 and a rear support 2 and the outlet for the mixed material is always located on the drum.

Other devices and/or processes are shown and disclosed in the documents JP01110104A, US-A-1665789 and EP-A-0947540. In particular, the document JP01110104A refers to a method and an apparatus for mixing resin concrete wherein the mixing is continuously performed in a stable state by injecting a curing agent in the raw material of resin concrete fed from a raw material feeder immediately before a stirring part in synchronous relation to the feed-out operation of the feeder.

The apparatus discloses in JP01110104A comprises a horizontal mixer having a fixed drum provided with an axial outlet side and a rotating shaft held into said fixed drum by a forward support. The rotating mixing shaft is fitted with pegs fixed in the length, pitch and division number. The mixer according to JP01110104A works under pressure so that the product is advanced and rotating filling the whole drum. The document US-A-1665789 refers to a rotational agitator for agitating the liquid contents of a container. The document EP-A-0947540 refers to a dry colouring master batch having a high pigment content and manufacturing process. In particular, such document discloses a horizontal mixer having a fixed drum provided with a transversal outlet and a rotating shaft held into said fixed drum by two (forward and back) supports. The rotating shaft is fitted with blades whose length, pitch and division number are fixed. The drum is heated and the rotating shaft shapes the product according a tubular layer. Another example of a device and/or process is shown and disclosed in the document DE 3105549 A1. In particular such document refers to a method and a device which provide the centrifugally rotation of the product by a rotating shaft having spiral pegs into a fixed drum of a horizontal mixer, the advancement of the mixed product into the fixed drum, tangential to the axis of mixing and along the inner surface of the fixed drum, the centrifugal rotation of the rotating shaft at a predetermined rotational speed for producing a tubular layer of the product inside the drum and advancing the tubular layer tangential to the inner surface of said drum (13), the expulsion of the product trough a transversal outlet.

Further reference is also nach to DE 2615506.

### DISCLOSURE OF INVENTION

The aim of the invention is the implementation of a process according to claim 1 and a device according to claim 2 allowing optimization of mixing, while reducing mixing times, with consequent energy savings.

### BRIEF DESCRIPTION OF THE DRAWINGS

Illustrative embodiments of the invention will now be described with reference to the accompanying drawings in which:

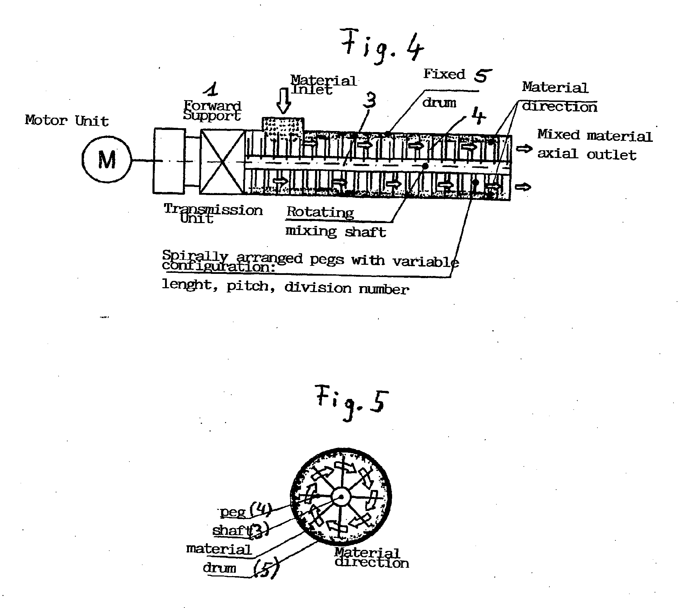

Fig. 4 illustrates a mixer according to the invention.
Fig. 5 shows a cross-section of the device according to fig. 4.

### BEST MODE OF CARRYING OUT THE INVENTION

The mixer of the invention is devoid of the mixing shaft 3 of the rear support 2 and is open on the mixed material outlet side. This allows axial unloading of the mixed products, thus avoiding them stagnating inside the mixing chamber.

The operational principle of the horizontal mixer according to the invention consisting in a longitudinal advancement of the mixed product, tangential to the axis of mixing i.e. along the inner surface of the drum, allows the introduction of liquid or solid components, at atmospheric pressure, into advanced positions along the mixing drum, thus satisfying production processes.

The mixing created by the centrifugal rotation allows the thorough mixing and homogenization of solid or liquid products without damaging the particles, since the principle does not transmit stress and friction, which are instead caused by existing mixing principles.

The mixer according to the invention may be installed in production processes individually or in cascade. The fixed drum 5 being heated or cooled to various temperatures.

According to the invention, the rotating mixing shaft works at a high revolution rate and hence the high speed mixing reduces mixing times and consequently reduces the residence times of products inside the mixer. This also means reducing mixing chamber volumes.

To give a practical example, where a traditional mixer with mixing times equal to 1 hour is required, with the centrifugal mixing principle longitudinal to the axis, the mixing residence time is reduced to 10 seconds, which, translated into volume, means a 3600:10 reduction in mixing chamber volume - 360 times smaller.

This enormous reduction in mixing chamber volume allows the use of very low installed electrical energies, and during changeovers, involves enormously reduced cleaning times and washing materials.

Variable configurations (i.e. length, pitch and division number) of spirally arranged pegs 4 are arranged on the rotating mixing shaft 3, cf. in figures 4 and 5.

## Claims

1. A mixing process for solid or solid and liquid products, comprising the steps of:
continuously mixing a product, centrifugally rotating the same by a rotating shaft (3) provided with spirally arranged pegs (4) into a fixed heated or cooled drum (5) of a horizontal mixer, the rotating shaft (3) being held into said fixed drum (5) by a forward support (1) and being devoid of a rear support, **the step of mixing centrifugally said products into said fixed drum (5) being executed for a time corresponding to 10 seconds;**
advancing said mixed product into said fixed drum (5) of said horizontal mixer, tangential to the axis of mixing and along the inner surface of said fixed drum (5) of said horizontal mixer, the product being advanced at an atmospheric pressure and towards an axial outlet side, the centrifugal rotation of the rotating shaft at a predetermined rotational speed achieving the mixing of the product by shaping the same according a tubular layer and at the same time advancing said tubular layer tangential to the inner surface of said drum (5);
**throwing out the mixed products through an axial outlet side of the drum (5).**

2. A horizontal mixer **for implementation of a process according to claim 1,** comprising:
a fixed drum (5) having an axial outlet side, said fixed drum (5) being heated or cooled, **said fixed drum being at atmospheric pressure;**
a rotating shaft (3) held into said fixed drum (5) by a forward support (1);
said rotating mixing shaft is fitted with spirally arranged pegs (4), the length, pitch and division number of the spirally arranged pegs (4) being variable;
said mixer working at an atmospheric pressure,
said rotating shaft being rotated at a predetermined rotational speed for shaping the product according to a tubular layer tangential to the inner surface of said fixed drum (5), **said mixer being devoid of a rear support for said rotating shaft (3).**

## Patentansprüche

1. Ein Mischvorgang für feste oder feste und flüssige Stoffe, einschließlich folgender
Phasen:
Fortwährendes Mischen eines Stoffes, durch dessen zentrifugierendes Drehen mittels einer sich drehenden Welle (3), die über spiralförmig angeordnete Stifte (4) in einer feststehenden, beheizten oder gekühlten Trommel (5) eines horizontalen Mischers verfügt, wobei die sich drehende Welle (3) in dieser feststehenden Trommel (5) mit der genannten Halterung (1) befestigt wird und keine hintere Halterung aufweist, der **Phase des zentrifugalen Mischens der genannten Stoffe in dieser feststehenden Trommel (5) über eine dem Zeitraum von 10 Sekunden entsprechenden Dauer;**
Unter Fortsetzung des oben genannten Mischens in dieser feststehenden Trommel (5) des genannten horizontalen Mischers wird der Stoff tangential zur Mischachse und entlang der Innenseite der feststehenden Trommel (5) des genannten horizontalen Mischers bei einem atmosphärischen Druck zu einem axialen seitlichen Auslass weitergeleitet, wobei die zentrifugale Rotation der sich mit einer vorab festgelegten Rotationsgeschwindigkeit drehenden Welle das Mischen des Stoffes durch dessen Formung in einer rohrförmigen Schicht erzielt, die gleichzeitig tangential zur Innenseite der genannten Trommel (5) vorwärts bewegt wird;
**Ausgabe der gemischten Stoffe über einen axialen seitlichen Auslass der Trommel (5).**

2. Ein horizontaler Mischer **zur Implementierung eines Prozesses entsprechend Anspruch 1**, einschließlich:
Einer feststehenden Trommel (5) mit einem axialen seitlichen Auslass, wobei diese Trommel (5) beheizt oder gekühlt wird und **einen atmosphärischen Druck aufweist;**
Einer sich drehenden Welle (3), die an der genannten feststehenden Trommel (5) durch eine Halterung auf der Vorderseite (1) befestigt wird;
Diese sich drehende Mischwelle verfügt über spiralförmig angeordnete Stifte (4), wobei die Länge, der Abstand und die Anzahl dieser spiralförmig angeordneten Stifte (4) unterschiedlich ist;
Der genannte Mischer arbeitet mit einem atmosphärischen Druck, wobei die genannte sich drehende Welle bei einer vorab festgelegten Rotationsgeschwindigkeit arbeitet, um den Stoff entsprechend einer rohrförmigen Schicht tangential zur Innenseite der genannten feststehenden Trommel (5) zu formen, während **der Mischer nicht über eine hintere Halterung für diese sich drehende Welle (3) verfügt.**

## Revendications

1. Procédé de mélange de produits solides ou solides et liquides, **caractérisé par** les étapes suivantes :
le mélange continu du produit, rotation centrifuge du produit au moyen d'un arbre tournant (3) équipé de chevilles (4) disposées en spirale dans un tambour fixe (5) réchauffé ou refroidi d'un mélangeur horizontal, l'arbre tournant (3) étant bloqué dans le tambour fixe (5) par un support antérieur (1) et étant dépourvu d'un support postérieur, la phase de mélange centrifuge de ces produits dans ledit tambour fixe (5) étant réalisée en un temps correspondant à 10 secondes ;
l'avance dudit produit mélangé dans ledit tambour fixe (5) dudit mélangeur horizontal, tangentiel par rapport à l'axe de mélange et le long de la surface interne dudit tambour fixe (5) dudit mélangeur horizontal, à une pression atmosphérique et vers un côté de sortie axiale, la rotation centrifuge de l'arbre tournant achevant le mélange du produit à une vitesse de rotation prédéterminée en formant ce dernier selon une couche tubulaire tangentielle et ladite couche tubulaire tangentielle par rapport à la surface interne dudit tambour (5) avançant simultanément ;
le passage des produits mélangés à travers le côté de la sortie axiale du tambour (5).

2. Mélangeur horizontal pour la mise en oeuvre d'un processus selon la revendication 1, comprenant :
un tambour fixe (5) ayant un côté de sortie axiale, ledit tambour fixe (5) étant réchauffé ou refroidi et fonctionnant à la pression atmosphérique ;
un arbre tournant (3) bloqué dans le tambour fixe (5) par un support antérieur (1) ;
ledit arbre de mélange tournant étant équipé de chevilles disposées en spirale (4), la longueur, le pas et le nombre de divisions des chevilles disposées en spirale étant variable ;
ledit mélangeur fonctionnant à la pression atmosphérique, ledit arbre tournant étant actionné à une vitesse de rotation prédéterminée pour former le produit selon une couche tubulaire tangentielle par rapport à la surface interne dudit tambour fixe (5), ledit mélangeur étant dépourvu du support postérieur dudit arbre tournant (3).
